# FASCICULE DE BREVET EUROPEEN

(11) **EP 4 559 952 B1**
(45) Date de publication et mention de la délivrance du brevet: **05.08.2026**
(21) Numéro de dépôt: 23307054.9
(22) Date de dépôt: 24.11.2023
(51) Int. Cl.: C08G 65/335, B01J 20/26, C22B 59/00

(54) **NOUVEAU POLYMÈRE DE TYPE POLY(ÉTHER-PHOSPHORAMIDE) ET PROCÉDÉ D EXTRACTION D'UNE TERRE RARE D'UN MILIEU LIQUIDE METTANT EN OEUVRE UN TEL POLYMÈRE**
NEUES POLY(ETHERPHOSPHORAMID)POLYMER UND VERFAHREN ZUR ENTFERNUNG VON SELTENEN ERDEN AUS EINEM FLÜSSIGEN MEDIUM UNTER VERWENDUNG DIESES POLYMERS
NOVEL POLY(ETHER-PHOSPHORAMIDE) POLYMER AND METHOD FOR EXTRACTING RARE EARTH FROM A LIQUID MEDIUM USING SUCH A POLYMER

(43) Date de publication de la demande: 28.05.2025
(73) Titulaire: Centre National de la Recherche Scientifique, 75016 Paris (FR); Institut National des Sciences Appliquées de Lyon, 69100 Villeurbanne (FR); Université Claude Bernard Lyon I, 69100 Villeurbanne (FR); Institut National de Recherche et d'Analyse Physico-Chimique, Ariana- Tunis (TN)
(72) Inventeur: JAFFREZIC, Nicole, 69130 ECULLY (FR); CASABIANCA, Hervé, 69100 VILLEURBANNE (FR); MERCIER, Régis, 69540 IRIGNY (FR); MARESTIN, Catherine, 69230 SAINT-GENIS-LAVAL (FR); CHATTI, Saber, 69100 VILLEURBANNE (FR); CHABBAH, Taha, 69100 VILLEURBANNE (FR); SCHIETS, Frédéric, 69100 VILLEURBANNE (FR)
(74) Mandataire: Santarelli

(56) Documents cités:
- US-A1- 2023 101 316

## Description

La présente invention s'inscrit dans le domaine de la valorisation des terres rares.

Plus particulièrement, la présente invention concerne un polymère particulièrement adapté pour l'extraction en phase solide d'une terre rare contenue dans un milieu liquide, ainsi qu'un matériau composite contenant un tel polymère sur un support solide. L'invention concerne également l'utilisation d'un tel polymère ou d'un tel matériau composite pour l'extraction d'une terre rare d'un milieu liquide la contenant. Un autre objet de l'invention est un procédé d'extraction d'une terre rare d'un milieu liquide la contenant, mettant en œuvre un tel polymère ou un tel matériau composite.

Les terres rares, et en particulier le lanthane, sont utilisées pour de nombreuses applications industrielles. On peut notamment citer à cet égard, à titre d'exemples, la fabrication de verres, notamment de lentilles d'appareils de photographie ou de télescopes, la production d'aciers et fontes nodulaires, la fabrication des piles à combustible, des batteries, en particulier des batteries rechargeables à hydrure utilisées dans les véhicules hybrides, la catalyse chimique pour le raffinage du pétrole, la préparation d'alliages légers, notamment pour l'amélioration de leurs caractéristiques mécaniques, etc. Les terres rares sont également des éléments importants dans l'industrie des nouvelles technologies, pour la fabrication de composants électroniques pour ordinateurs et téléphones portables, au sein desquels elles entrent notamment dans la composition des diodes électroluminescentes et des aimants.

L'approvisionnement en ces matières premières à haute valeur ajoutée s'avère difficile, notamment en raison de leur faible disponibilité dans la nature. Le lanthane par exemple n'y existe pas sous forme d'élément libre.

Les effluents miniers, notamment issus des gisements phosphatiers, tels que ceux de Tunisie, constituent actuellement une des sources courantes d'approvisionnement en terres rares. Le minerai présent dans ces gisements, de type phosphorite sédimentaire, contient en effet plusieurs milliers de ppm d'oxydes de terres rares, dont les plus abondantes sont le cérium et le lanthane.

Ce minerai de phosphate est couramment utilisé pour la fabrication industrielle d'acide phosphorique, par le biais de sa réaction avec de l'acide sulfurique dans l'eau. Cette réaction mène typiquement à la formation d'acide phosphorique H₃PO₄, d'acide fluorhydrique HF et de sulfate de calcium hydraté CaSO₄,xH₂O, où x = 0,5 ou 2. On obtient à l'issue de la réaction deux phases principales : une phase liquide, contenant l'acide phosphorique, et une phase solide, comprenant le sulfate de calcium hydraté. La phase liquide en particulier est riche en terres rares. A l'heure actuelle, les terres rares en sont extraites par une technique d'extraction liquide-liquide, telle que celle décrite dans la publication de Agarwal et al., 2021, Mineral Processing and Extractive Metallurgy, 130(2): 90-97. Cette technique utilise cependant une quantité importante de solvant organique, en particulier issu de la pétrochimie, par exemple de kérosène, dont l'élimination subséquente s'avère problématique sur le plan environnemental. US2023/101316A1 divulgue une méthode consistant à retirer, adsorber, séparer, stocker ou séquestrer un métal provenant d'un flux de fluide aqueux.

CHABBAH et al.: Talanta, vol. 247, 2022, page 123550 divulgue de nouveaux sulfures de poly(éther-phosphoramide) à base de ressources naturelles.

Afin de pallier cet inconvénient, et d'éviter ou au moins limiter le recours à des solvants organiques polluants, plusieurs techniques d'extraction de type solide-liquide ont été proposées par l'art antérieur pour récupérer les terres rares d'un milieu liquide les contenant. Aucune de ces techniques ne présente toutefois une performance d'extraction satisfaisante.

La présente invention vise à remédier aux inconvénients des procédés proposés par l'art antérieur pour extraire les terres rares de milieux aqueux les contenant, notamment aux inconvénients exposés ci-avant, en proposant un matériau pouvant être mis en œuvre dans un procédé d'extraction de type solide-liquide, et permettant de réaliser une telle extraction de manière efficace. Des objectifs supplémentaires de l'invention sont que ce matériau puisse être obtenu, et que le procédé d'extraction l'utilisant puisse être mis en œuvre, de la manière la plus respectueuse de l'environnement possible.

L'invention vise également à ce que les terres rares puissent être facilement récupérées à l'issue du procédé, et de telle sorte que le matériau ayant permis leur extraction puisse être réutilisé.

Il a été découvert par les présents inventeurs que ces objectifs sont atteints par un polymère de structure spécifique, de la famille des poly(éther-phosphoramide), qui présente une affinité particulièrement élevée pour les terres rares, en particulier le lanthane et le cérium, comme notamment démontré par mesures d'impédance électrochimique à l'interface du polymère et de solutions de terre rare. Cette affinité est notamment, de manière particulièrement surprenante, bien plus élevée que celle d'autres polymères de structure très proche. Mis en œuvre dans un procédé d'extraction en phase solide, ce polymère permet ainsi d'extraire avec un haut taux d'extraction les terres rares contenues dans un milieu liquide. L'adsorption des terres rares sur ce polymère est en outre réversible, et leur désorption simple à réaliser, qui plus est avantageusement en phase aqueuse.

On entend dans la présente description, par terres rares, de manière classique en elle-même, le scandium, l'yttrium, et les 15 lanthanides, c'est-à-dire le lanthane, le cérium, le praséodyme, le néodyme, le prométhium, le samarium, l'europium, le gadolinium, le terbium, le dysprosium, l'holmium, l'erbium, le thulium, l'ytterbium et le lutécium.

Ainsi, selon un premier aspect, il est proposé selon la présente invention un polymère particulièrement utile pour l'extraction en phase solide d'une terre rare d'un milieu liquide la contenant. Ce polymère comprend un motif de répétition de formule générale (I) : 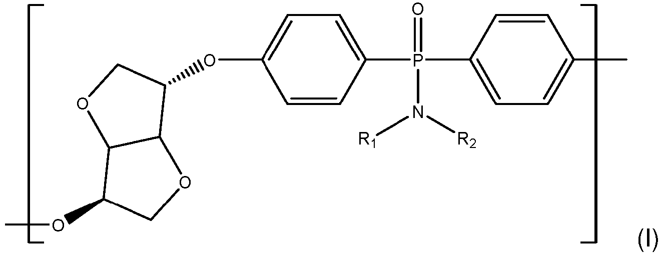 dans laquelle
R₁ et R₂, identiques ou différents, représentent chacun un atome d'hydrogène, ou un radical hydrocarboné linéaire, ramifié et/ou cyclique, saturé et/ou insaturé, aromatique ou non, éventuellement substitué, pouvant comporter un seul cycle ou plusieurs cycles, éventuellement condensés, éventuellement interrompu par un ou plusieurs hétéroatomes, tels que l'oxygène, le soufre ou l'azote, et comportant de préférence de 1 à 12 atomes de carbone,
   ou
R₁ et R₂ forment ensemble, avec l'atome d'azote auquel chacun est rattaché, un hétérocycle à 3 à 8 chainons, de préférence à 4 à 6 chainons, saturé ou insaturé, éventuellement aromatique, comprenant un ou plusieurs hétéroatomes dans le cycle, tel qu'un atome d'oxygène, éventuellement substitué par un ou plusieurs radicaux alkyle linéaires, ramifiés et/ou cycliques, chacun de ces radicaux alkyle étant de préférence en C1-C12, préférentiellement en C1-C6 et préférentiellement encore en C1-C3,
ledit hétérocycle étant éventuellement condensé à un ou plusieurs cycles ou hétérocycles, chacun à 3 à 8 chainons, de préférence à 4 à 6 chainons, saturés ou insaturés, éventuellement aromatiques, comprenant éventuellement un ou plusieurs hétéroatomes dans le cycle, et éventuellement substitués par un ou plusieurs radicaux alkyle linéaires, ramifiés et/ou cycliques, chacun de ces radicaux alkyle étant de préférence en C1-C12, préférentiellement en C1-C6 et préférentiellement encore en C1-C3.

Le polymère selon l'invention comprend de préférence 10 à 50 répétitions du motif de répétition de formule générale (I).

Il est en outre de préférence linéaire.

Préférentiellement, le motif de répétition de formule générale (I) est le seul motif de répétition du polymère.

Dans des modes de réalisation préférés de l'invention, la structure du polymère peut ainsi s'exprimer par la formule générale (II) : 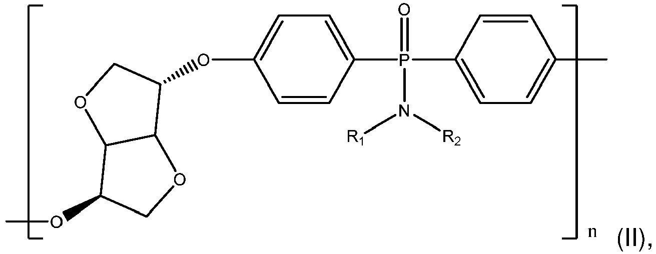 dans laquelle n est un nombre entier positif supérieur ou égal à 2, de préférence supérieur ou égal à 10, et préférentiellement compris entre 10 et 50, et R₁ et R₂ sont tels que définis en référence à la formule générale (I).

Le polymère selon l'invention peut par exemple répondre à la formule (Ila) : 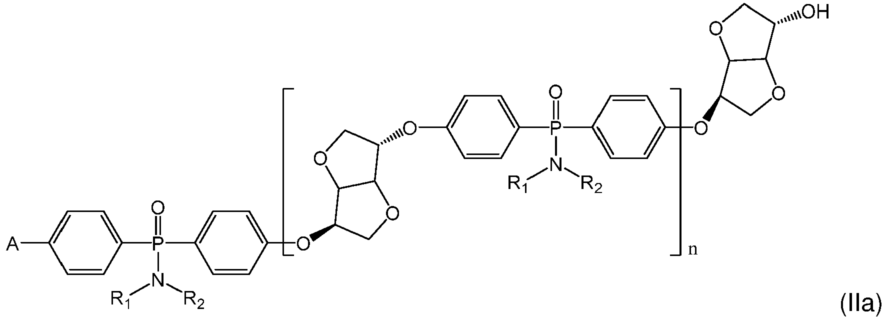 dans laquelle
n est un nombre entier positif supérieur ou égal à 2, de préférence supérieur ou égal à 10, et préférentiellement compris entre 10 et 50,
R₁ et R₂ sont tels que définis en référence à la formule générale (I),
et A représente un atome de fluor, un atome de chlore, un atome d'hydrogène ou un groupe hydroxyle.

Le polymère selon l'invention intègre avantageusement dans sa constitution un motif isosorbide. Ainsi, sa synthèse met en œuvre un synthon isosorbide, de formule générale (III) : 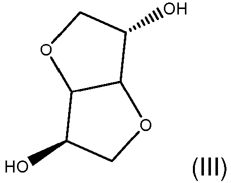 composé issu des agro-ressources. Ainsi, le polymère selon l'invention est avantageusement au moins partiellement biosourcé.

Comme indiqué ci-avant, ce polymère, en particulier dans ses modes de réalisation répondant aux formules générales (II) et (Ila), présente une affinité particulièrement élevée pour les terres rares, et notamment pour les deux terres rares les plus abondantes dans la nature, le lanthane et le cérium. Cette affinité est bien plus importante que celle de polymères de structure proche, et notamment de polymères répondant à une formule similaire, mais dans laquelle :
- l'atome d'oxygène lié à l'atome de phosphore est remplacé par un atome de soufre,
- et/ou l'atome d'azote lié à l'atome de phosphore, est remplacé par un atome de carbone,
- et/ou le motif isosorbide est remplacé par un motif issu du bisphénol A, de formule (IV) :

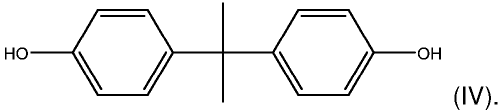

On ne préjugera pas ici des mécanismes expliquant l'affinité particulièrement élevée du polymère selon l'invention vis-à-vis des terres rares. On ne peut que constater qu'elle semble spécifiquement liée à la combinaison, au sein de la structure du polymère, de l'atome d'oxygène et de l'atome d'azote respectivement liés à l'atome de phosphore, l'ensemble formant une fonction phosphoramide, et du motif isosorbide. Rien dans l'art antérieur ne laissait présager qu'une telle combinaison spécifique serait associée à une affinité vis-à-vis des terres rares bien plus haute que celle des polymères ne comportant pas cette combinaison spécifique, même de structures très proches.

Dans des modes de réalisation particulièrement préférés de l'invention, dans la formule générale (I), ainsi que dans les formules générales (II) et (IIa), R₁ et R₂ forment ensemble, avec l'atome d'azote auquel chacun est rattaché, un hétérocycle saturé à 3 à 8 chainons, de préférence à 6 chainons, comprenant un ou plusieurs hétéroatomes dans le cycle, éventuellement substitué par un ou plusieurs radicaux alkyle linéaires, ramifiés et/ou cycliques, chacun de ces radicaux alkyle étant de préférence en C1-C12, préférentiellement en C1-C6 et préférentiellement encore en C1-C3.

Préférentiellement, dans la formule générale (I), ainsi que dans les formules générales (II) et (Ila), R₁ et R₂ forment ensemble, avec l'atome d'azote auquel chacun est rattaché, un noyau morpholine, éventuellement substitué par un ou plusieurs radicaux alkyle linéaires, ramifiés et/ou cycliques, chacun de ces radicaux alkyle étant de préférence en C1-C12, préférentiellement en C1-C6 et préférentiellement encore en C1-C3.

Dans des modes de réalisation particuliers de l'invention, le noyau morpholine n'est pas substitué.

Ainsi, le polymère selon l'invention peut comprendre un motif de répétition de formule générale (V) :

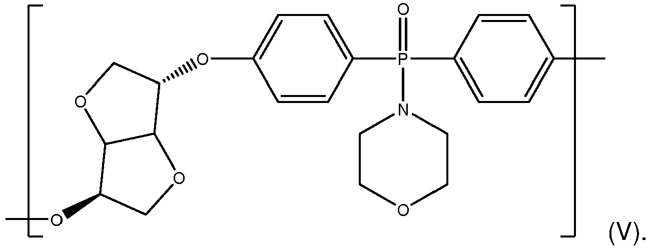

Le polymère peut notamment répondre à la formule générale [VI) : 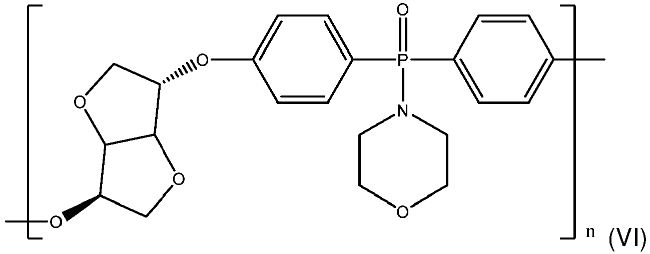 dans laquelle n est un nombre entier positif supérieur ou égal à 2, de préférence supérieur ou égal à 10, et préférentiellement compris entre 10 et 50. Le polymère répondant à cette formule générale (VI) présente une affinité pour les terres rares, notamment le lanthane et le cérium, qui est particulièrement importante.

Le polymère selon l'invention peut par exemple répondre à la formule (Vla) : 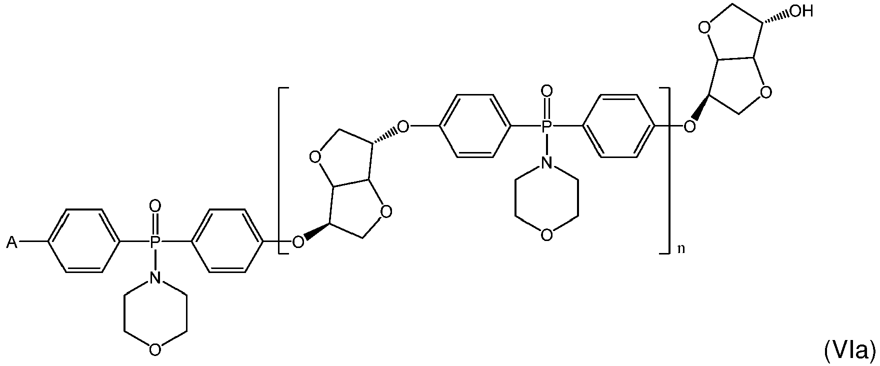 dans laquelle
n est un nombre entier positif supérieur ou égal à 2, de préférence supérieur ou égal à 10, et préférentiellement compris entre 10 et 50,
et A représente un atome de fluor, un atome de chlore, un atome d'hydrogène ou un groupe hydroxyle.

Dans des modes de réalisation alternatifs de l'invention, dans la formule générale (I), ainsi que dans les formules générales (II) et (IIa), R₁ et R₂, identiques ou différents, représentent chacun un atome d'hydrogène ou un radical alkyle linéaire ou ramifié en C1-C6, de préférence un radical méthyle ou un radical éthyle.

Dans cette configuration, préférentiellement, R₁ et R₂, identiques ou différents, représentent chacun un radical méthyle ou un radical éthyle.

Dans des variantes de l'invention, dans la formule générale (I), ainsi que dans les formules générales (II) et (IIa), R₁ et R₂, identiques ou différents, représentent chacun un atome d'hydrogène ou un groupe cyclique aromatique comportant de préférence de 1 à 12 atomes de carbone, comportant un seul cycle ou plusieurs cycles, éventuellement condensés, contenant éventuellement un ou plusieurs hétéroatomes dans le(s) cycle(s), et éventuellement substitué par un ou plusieurs radicaux alkyle linéaires, ramifiés et/ou cycliques, chacun de ces radicaux alkyle étant de préférence en C1-C6 et préférentiellement en C1-C3.

En particulier, R₁ et R₂, identiques ou différents, peuvent alors chacun représenter un noyau choisi parmi un noyau benzène et un noyau naphtalène, ce noyau étant optionnellement substitué par un ou plusieurs radicaux alkyle linéaires, ramifiés et/ou cycliques, de préférence en C1-C6 et préférentiellement en C1-C3.

De manière générale, lorsqu'ils ne forment pas un cycle ensemble, R₁ et R₂ sont de préférence tous deux différents d'un atome d'hydrogène. Ils sont en outre préférentiellement identiques.

Ainsi, dans des modes de réalisation particuliers de l'invention, dans la formule générale (I) et les formules générales (II) et (Ila) ci-dessus, R₁ et R₂ représentent chacun, simultanément :
- un radical méthyle,
- un radical éthyle,
- un noyau benzène,
- ou un noyau naphtalène.

Le polymère selon l'invention peut être préparé selon toute voie de synthèse du ressort de l'homme du métier.

Il peut par exemple être préparé à partir du synthon isosorbide, de formule (III) ci-dessus, et d'un synthon de formule générale (VII) : 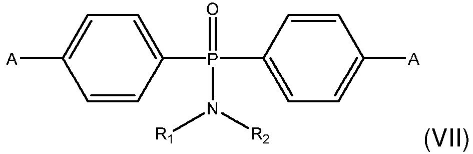
dans laquelle A, R₁ et R₂ sont tels que défini précédemment,
en particulier de formule (VIIa) : 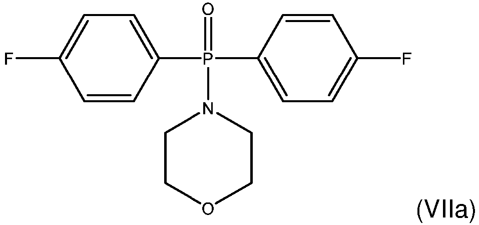
par une réaction de substitution nucléophile aromatique (SnAr).

Le synthon de formule (VII) ou (VIIa) peut être obtenu par toute méthode classique en elle-même, en particulier par une réaction d'oxydation du composé thiophosphoryle correspondant de formule respectivement (VIII) ou (VIIIa) : 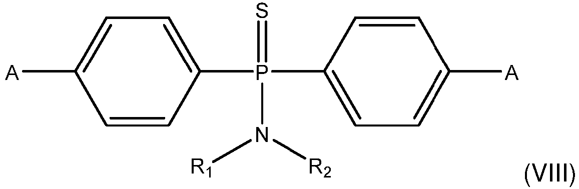 dans laquelle A, R₁ et R₂ sont tels que défini précédemment,

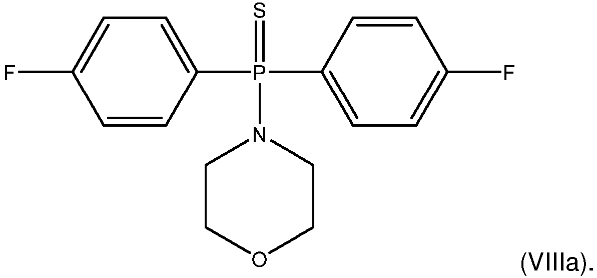

Un exemple de procédé de synthèse d'un tel composé de type thiophosphoryle est notamment décrit dans la publication de Chabbah et al., 2022, Talanta, 247: 123550.

Le polymère selon l'invention peut être utilisé tel quel, sous forme de poudre, pour l'extraction d'une terre rare d'un milieu liquide la contenant.

La forme de poudre du polymère peut être obtenue à partir d'une solution du polymère dans un solvant dans lequel il est soluble, par exemple le diméthylformamide, le diméthylsulfoxyde ou la N-méthylmorpholine, par précipitation dans un solvant ou mélange de solvants dans lesquels il est insoluble, tel qu'un mélange eau/méthanol, puis séchage du précipité formé par évaporation des solvants, ce séchage étant optionnellement suivi d'un tamisage à travers un tamis, par exemple de taille de mailles de 50 µm à 200 µm.

Le polymère selon l'invention peut autrement être utilisé, pour l'extraction d'une terre rare d'un milieu liquide la contenant, sous une forme dans laquelle il est intégré dans un matériau composite, au sein duquel il est supporté par un support solide.

Ainsi, un autre aspect de l'invention concerne un matériau composite comprenant un polymère selon l'invention sur un support solide sous forme divisée.

On entend, par support solide sous forme divisée, que le support solide se présente sous forme d'un ensemble d'éléments individuels distincts, de préférence identiques.

Le support solide est de préférence inerte vis-à-vis des terres rares, et plus généralement du milieu liquide contenant la terre rare qu'il est souhaité en extraire.

Il se présente de préférence sous la forme la plus divisée possible, de sorte à augmenter au maximum la surface de contact entre le polymère selon l'invention et le milieu liquide contenant la terre rare à extraire.

Le support solide peut notamment se présenter sous la forme de fibres, de billes ou de particules de forme irrégulière.

Au titre de fibres pouvant former le support solide du matériau composite selon l'invention, on peut citer par exemple les fibres hydrophiles, de préférence d'origine naturelle, telles que les fibres de cellulose, notamment de diamètre compris entre 10 et 50 µm, ou les fibres de carbone, notamment de diamètre compris entre 5 et 20 µm.

De telles fibres peuvent avantageusement être facilement imprégnées par le polymère selon l'invention, par toute technique d'imprégnation d'un support solide classique en elle-même, notamment par immersion des fibres dans une solution du polymère, ultrasonication et chauffage puis évaporation contrôlée sous vide.

Le matériau composite peut alors par exemple être mis en œuvre dans une colonne de chromatographie, à travers laquelle le milieu contenant la terre rare à extraire est amené en circuler.

Le support solide peut autrement par exemple se présenter sous forme de particules, en particulier sous la forme de billes, notamment de diamètre compris entre 200 et 2000 nm, ou de particules de forme irrégulière.

De telles particules peuvent par exemple être formées à base d'oxyde(s) inorganique(s), par exemple d'oxyde de silicium ou d'oxyde métallique, notamment oxyde de cuivre, de nickel, de zinc, de fer, etc., une telle liste n'étant nullement limitative de l'invention.

Le support solide peut avantageusement se présenter sous forme de billes à propriétés magnétiques, telles que des billes de type magnétite, combinant les avantages d'une grande surface de contact et d'une grande facilité de séparation des milieux liquides, et particulièrement adaptées au traitement de grands volumes de milieux liquides. Ces billes de magnétite peuvent par exemple présenter un diamètre compris entre 200 et 2000 nm.

De telles billes, ou autres particules solides en forme de billes ou de forme irrégulière, peuvent avantageusement être facilement enrobées d'une couche de polymère selon l'invention, par toute technique d'enrobage d'un support solide classique en elle-même, par exemple par immersion dans une solution du polymère, ultrasonication et chauffage puis évaporation contrôlée sous vide. L'épaisseur de la couche d'enrobage de polymère est de préférence comprise entre 10 nm et 100 nm.

De manière générale, le polymère selon l'invention est imprégné sur, ou forme une couche d'enrobage sur, le support solide, plus précisément sur les éléments individuels qui le composent.

Un aspect supplémentaire de l'invention concerne un procédé d'extraction d'une terre rare d'un milieu liquide, en particulier d'un milieu liquide aqueux, la contenant.

Ce procédé comprend la mise en contact de ce milieu liquide avec un polymère selon l'invention, sous forme solide, notamment pulvérulente, ou avec un matériau composite selon l'invention, comprenant ce polymère, de sorte à réaliser l'adsorption de la terre rare par ce dernier. Il comprend ensuite la séparation du polymère, ou du matériau composite, comprenant la terre rare qui a été adsorbée sur le polymère, et de ce milieu liquide.

Le procédé selon l'invention, qui s'inscrit dans le domaine de l'extraction solide-liquide, évite avantageusement le recours à la consommation de solvants organiques requise par l'extraction liquide-liquide proposée par l'art antérieur. L'étape de mise en contact du procédé selon l'invention est de préférence réalisée à un pH inférieur ou égal à 3, de préférence inférieur ou égal à 2. Ainsi, le procédé selon l'invention peut comprendre une étape initiale de mesure du pH du milieu liquide contenant la terre rare, et, si nécessaire, une étape d'ajustement de ce pH à la valeur requise, par exemple au moyen d'un acide fort, tel que l'acide sulfurique, l'acide chlorhydrique, l'acide nitrique ou l'acide phosphorique. L'établissement d'un tel pH permet avantageusement de libérer la terre rare sous forme ionique au sein du milieu, facilitant ainsi son extraction.

La durée de la mise en contact est avantageusement choisie pour permettre l'adsorption de la plus grande quantité possible de la terre rare par le polymère selon l'invention. Cette durée peut par exemple être comprise entre 1 minute et 2 heures.

La mise en contact peut être réalisée de toute manière connue de l'homme du métier, par exemple par circulation du milieu liquide dans une colonne de chromatographie contenant le matériau composite selon l'invention, dont le support solide se présente alors préférentiellement sous forme de fibres, ou par mélange du milieu liquide et du matériau composite, dont le support solide se présente alors préférentiellement sous forme particulaire, et/ou par mélange du milieu liquide et de particules du polymère selon l'invention sous forme de poudre. Dans ces deux derniers cas, la poudre de polymère et/ou le matériau composite sont de préférence dispersés de manière sensiblement homogène dans tout le volume de milieu liquide.

L'étape de mise en contact peut avantageusement être réalisée à température ambiante.

L'étape de séparation du polymère ou du matériau composite, et du milieu liquide, peut être réalisée de toute manière classique en elle-même, en fonction notamment du type de support solide dans le matériau composite, et du mode de mise en œuvre de l'étape de mise en contact du procédé.

A titre d'exemple, la séparation peut être réalisée par simple écoulement du milieu liquide hors d'une colonne de chromatographie mise en œuvre dans le cadre du procédé, ou par tout moyen classique de séparation solide-liquide, tel que la filtration, la centrifugation, etc., ou encore par voie magnétique dans les modes de réalisation dans lesquels le support solide du matériau composite est constitué de billes à propriétés magnétiques. Ce dernier mode de réalisation est particulièrement préféré dans le cadre de l'invention.

Le procédé selon l'invention comporte de préférence une étape finale de séparation de la terre rare et du polymère ou du matériau composite sur lequel elle a été adsorbée pendant l'étape de mise en contact du procédé.

Cette étape de séparation, dite désorption, peut être réalisée par toute méthode connue de l'homme du métier. Elle peut notamment être réalisée par lavage(s) des particules du polymère, ou du matériau composite, par une solution aqueuse contenant un complexant de la terre rare, tel que par exemple le phosphate de tributyle, ou le cis-1,3,5-triamino 2,4,6-trihydroxycyclohexane (aussi appelé 1,3,5-triamino-1,3,5-tridéoxy-cis-inositol), dite solution de régénération. Un tel lavage est de préférence réalisé pendant un temps suffisant pour provoquer la désorption du polymère de la totalité de la quantité de terre rare qui y avait été adsorbée.

Après séparation du polymère ou du matériau composite et de la solution de régénération, cette séparation pouvant être réalisée par toute technique de séparation solide-liquide connue en elle-même, notamment par une des techniques décrites ci-avant, on obtient avantageusement une solution aqueuse contenant la terre rare. Le polymère ou le matériau composite peuvent quant à eux être avantageusement réutilisés, pour une nouvelle mise en œuvre du procédé selon l'invention sur un nouveau milieu liquide contenant une terre rare à en extraire.

La terre rare, pour l'extraction de laquelle est appliqué le procédé selon l'invention, peut être aussi bien un lanthanide, que le scandium ou l'yttrium. Il s'agit de préférence d'un lanthanide, et notamment du lanthane ou du cérium. Bien entendu, le procédé selon l'invention peut être utilisé pour extraire simultanément une pluralité de terres rares d'un milieu liquide les contenant en mélange.

Le procédé selon l'invention trouve une application tout particulièrement avantageuse pour l'extraction de terres rares à partir d'effluents miniers, un tel domaine d'application n'étant toutefois nullement limitatif de l'invention.

Ainsi, dans des modes de mise en œuvre particuliers de l'invention, le milieu liquide, auquel le procédé selon l'invention est appliqué, est un effluent minier, notamment issu d'un gisement phosphatier, par exemple d'un gisement phosphatier de Tunisie.

Cet effluent peut notamment être une solution d'acide phosphorique telle que produite à partir d'un minerai de phosphate extrait d'un tel gisement.

Il peut autrement s'agir d'un lixiviat de lavage d'un tel minerai de phosphate. Le milieu liquide auquel est appliqué le procédé selon l'invention peut autrement être un effluent industriel, par exemple un effluent de l'industrie chimique.

L'invention concerne également l'utilisation d'un polymère ou d'un matériau composite selon l'invention, répondant à l'une ou plusieurs des caractéristiques décrites ci-avant, pour l'extraction d'une terre rare d'un milieu liquide, en particulier aqueux, la contenant.

Cette utilisation peut répondre à l'une ou plusieurs des caractéristiques décrites ci-avant en référence au procédé selon l'invention d'extraction d'une terre rare d'un milieu liquide la contenant.

En particulier, la terre rare peut être un lanthanide, notamment le lanthane ou le cérium.

Le milieu liquide peut être un effluent minier, par exemple issu d'un gisement phosphatier, tel qu'une solution d'acide phosphorique obtenue à partir d'un minerai de phosphate ou un lixiviat de lavage d'un tel minerai. Il peut autrement s'agir par exemple d'un effluent industriel.

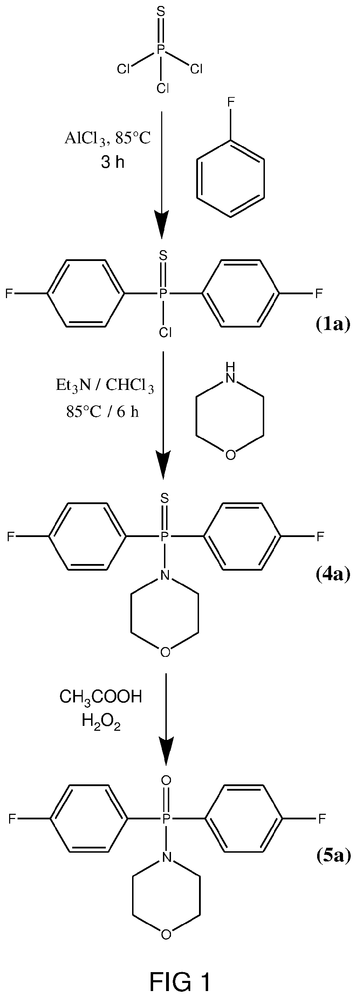

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 7, dans lesquelles :
La figure 1 montre un schéma réaction pour la production de monomères phosphorylés à motif morpholine entrant dans la composition d'un polymère selon l'invention ou de polymères comparatifs non conformes à l'invention.

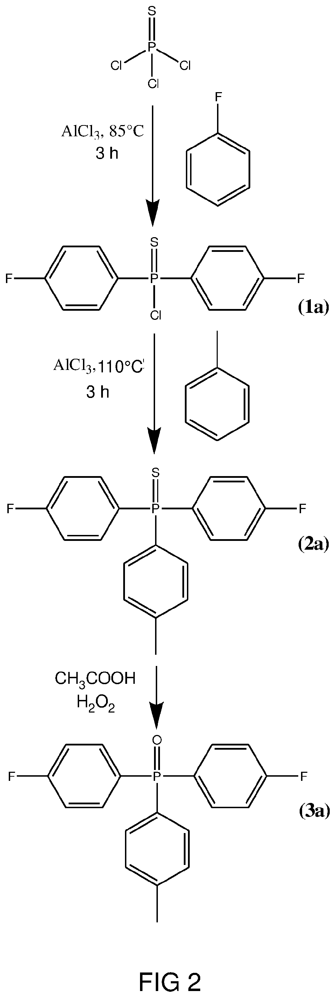

La figure 2 montre un schéma réaction pour la production de monomères phosphorylés à motif méthyl phényl entrant dans la composition de polymères comparatifs non conformes à l'invention.

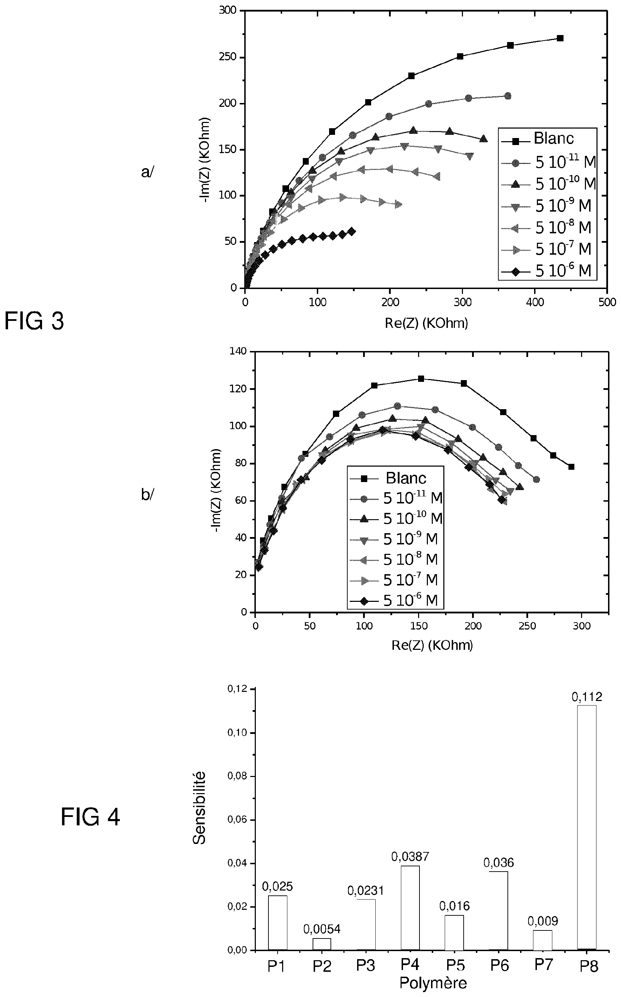

La figure 3 montre les spectres d'impédance, sous forme de diagrammes de Nyquist représentant la partie imaginaire de l'impédance en fonction de la partie réelle de l'impédance, obtenus dans une expérience de mesure d'impédance électrochimique mettant en œuvre une électrode enrobée d'un polymère dans une solution de lanthane à différentes concentrations entre 5.10⁻¹¹ M et 5.10⁻⁶ M, en a/ pour un polymère conforme à l'invention, en b/ pour un polymère comparatif non conforme à l'invention.
La figure 4 montre un graphe représentant la sensibilité vis-à-vis du lanthane, définie comme le rapport de la variation relative de la résistance de polarisation sur le logarithme de la concentration en lanthane, déterminée à partir de mesures par spectroscopie d'impédance électrochimique, pour un polymère selon l'invention (P8) et des polymères comparatifs non conformes à l'invention (P1 à P7).

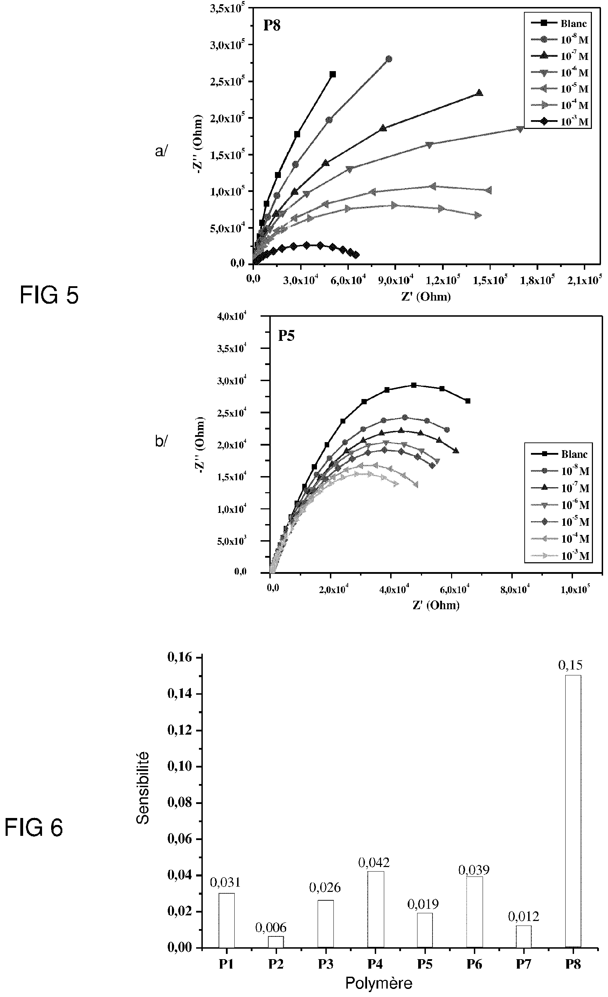

La figure 5 montre les spectres d'impédance, sous forme de diagrammes de Nyquist représentant la partie imaginaire de l'impédance en fonction de la partie réelle de l'impédance, obtenus dans une expérience de mesure d'impédance électrochimique mettant en œuvre une électrode enrobée d'un polymère dans une solution de cérium à différentes concentrations entre 10⁻⁸ M et 10⁻³ M, en a/ pour un polymère conforme à l'invention, en b/ pour un polymère comparatif non conforme à l'invention.
La figure 6 montre un graphe représentant la sensibilité vis-à-vis du cérium, définie comme le rapport de la variation relative de la résistance de polarisation sur le logarithme de la concentration en cérium, déterminée à partir de mesures par spectroscopie d'impédance électrochimique, pour un polymère selon l'invention (P8) et des polymères comparatifs non conformes à l'invention (P1 à P7).

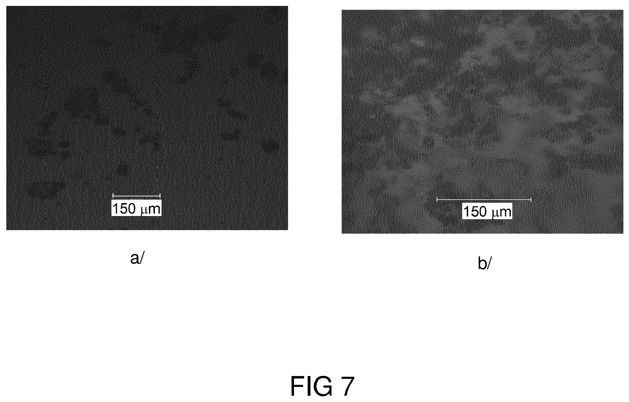

La figure 7 montre des photographies de particules d'un polymère conforme à l'invention, sous éclairage à 482 nm, avec lecture de la luminescence à 425 nm, en a/, à l'état initial, et en b/, après 24 h d'incubation dans un milieu aqueux acide contenant du lanthane.

### A/ Synthèse des polymères

Un polymère conforme à l'invention P8 et des polymères comparatifs non conformes à l'invention, P1 à P7, sont synthétisés comme indiqué ci-après.

### A.1/ Synthèse des monomères phosphorylés

Des monomères à noyau morpholine de formule (4a) et (5a) sont synthétisés selon le schéma réactionnel montré sur la figure 1. Des monomères de formule (2a) et (3a) à motif méthyl phényl sont synthétisés selon le schéma réactionnel montré sur la figure 2.

### A.1.1/ Synthèse du bis(4-fluorophényl)chloro thiophosphore (1a)

Dans un ballon tricol de 250 mL équipé d'un réfrigérant surmonté d'un piège à HCl (KOH dissout dans l'eau), d'une agitation magnétique, d'une ampoule à addition et balayée par un courant d'azote, sont introduits : 11,94 g (0,070 mol) de trichloro thiophosphore (PSCl₃) et 14,00 g (0,105 mol) d'AlCl₃ anhydre. Le mélange est agité à 40°C et 26,90 g (0,280 mol) de fluorobenzène sont ajoutés goutte à goutte. La solution est agitée à 85°C pendant 3 h.

Le milieu réactionnel est versé dans 500 mL d'un mélange glace/eau, puis extrait à l'acétate d'éthyle. La phase organique est lavée à l'eau, séchée sur sulfate de sodium anhydre. Le solvant est évaporé sous vide, et on obtient 17,20 g, avec 85 % de rendement, d'un solide blanc (1a).

### A.1.2/ Synthèse du thiooxyde de bis(4-fluorophényl)(4-méthylphényl)phosphine (2a)

Dans un ballon tricol de 250 mL équipé d'un réfrigérant surmonté d'un piège à HCl (KOH dissout dans l'eau), d'une agitation magnétique, d'une ampoule à addition et balayée par un courant d'azote, sont introduits : 10,00 g (0,034 mol) de bis(4-fluorophényl)chloro thiophosphore (1a) et 13,84 g (0,104 mol) d'AlCl₃ anhydre. Le mélange est agité à 40°C et 12,75 g (0,138 mol) de toluène sont ajoutés goutte à goutte. La solution est agitée à 110°C pendant 3 h.

Le milieu réactionnel est versé dans 500 mL d'un mélange glace/eau, puis extrait à l'acétate d'éthyle. La phase organique est lavée à l'eau, séchée sur sulfate de sodium anhydre. Le solvant est évaporé sous vide, le solide obtenu est recristallisée dans l'hexane puis lavé par l'éther de pétrole. On obtient 7,740 g, avec 65 % de rendement, d'un solide brun (2a).
RMN ¹H : (CDCl₃) : δ (ppm) : 7,77-7,68 (m, 4H, H2) ; 7,63-7,56 (m, 2H, H3) ; 7,31-7,27 (m, 2H, H4) ; 7,19-7,12 (m, 4H, H1) et 2,43 (s, 3H, H5)
RMN ¹⁹F : (CDCl₃) : δ (ppm) : -107, 43
RMN ³¹P : (CDCl₃) : δ (ppm) : 41, 40

### A.1.3/ Synthèse du thiooxyde de bis(4-fluorophényl)(morpholino)phosphine (4a)

Dans un ballon tricol de 250 mL équipé d'un réfrigérant, d'une agitation magnétique, d'une ampoule à addition et balayée par un courant d'azote, 10,0 g (0,034 mol) de bis(4-fluorophényl)chloro thiophosphore (1a) et 16 mL de chloroforme sont mélangés dans un bain de glace pendant 3 min. Ensuite, 6,64 g de morpholine dissous dans 16,0 mL de chloroforme sont ajoutés pendant 30 min. Puis, 7,71 g de triméthylamine sont ajoutés à la solution. Apres avoir complété l'ajout, la solution est chauffée à 85°C pendant 6 h.

Finalement, le mélange réactionnel est refroidi à température ambiante puis filtré. Le filtrat est lavé à l'eau puis extrait par le dichlorométhane, séché sur sulfate de sodium anhydre. Le solvant est évaporé sous vide.

Le produit (4a) obtenu se présente sous forme d'une poudre rouge brique suite à une séparation par colonne avec un mélange de 9/1 (dichlorométhane / Acétonitrile). Le rendement est de 75%.
RMN ¹H : (CDCl₃) : δ (ppm) : 8,02-7,93 (m, 4H, H2) ; 7,12-7,05 (m, 4H, H1) ; 3,70-3,66 (m, 4H, H4) et 2,80-2,75 (m, 4H, H3)
RMN ¹⁹F: (CDCl₃): δ (ppm) : -106,94
RMN ³¹P: (CDCl₃): δ (ppm): 65,43

### A.1.4/ Synthèse des monomères (3a) et (5a)

Dans un tricol de 100 mL équipé d'un réfrigérant, d'une agitation magnétique, d'une ampoule à addition sont introduits (0,0155 mol) de (2a) ou (4a) et 17,0 mL d'acide acétique glacial. Le milieu réactionnel est placé à 90°C. 1,67g (0,0490 mol) d'eau oxygénée, (solution à 35% en poids dans l'eau) sont additionnés très lentement et goutte-à-goutte. Après 2 h de réaction, 0,83 g supplémentaires d'eau oxygénée sont ajoutés plus rapidement. La réaction est suivie par RMN ³¹P. Après 3 h de réaction, le milieu réactionnel est refroidi et laissé 30 min à température ambiante sans agitation. Le mélange est filtré sur célite pour éliminer le soufre formé. La célite est rincée deux fois à l'acide acétique. Le filtrat est évaporé sous vide puis extrait avec 100 mL d'acétate d'éthyle, neutralisé avec une solution saturée de carbonate de sodium jusqu'à pH 8-9, lavé à l'eau distillée, et séché sur sulfate de sodium. Le solvant est évaporé sous vide, et le solide obtenu est lavé par l'éther de pétrole chaud. On obtient avec 68% de rendement le monomère (3a), et avec 60% de rendement le monomère (5a), sous forme de solides bruns.
(3a)
   RMN ¹H : (CDCl₃) : δ (ppm) : 7,68-7,63 (m, 4H, H2) ; 7,55-7,51 (m, 2H, H3) ; 7,31-7,28 (m, 2H, H4) ; 7,18-7,14 (m, 4H, H1) et 2,43 (s, 3H, H5)
   RMN ¹⁹F: (CDCl₃): δ (ppm): -106,57
   RMN ³¹P: (CDCl₃): δ (ppm): 27,71
(5a)
   RMN ¹H : (CDCl₃) : δ (ppm) : 7,91-7,85 (m, 4H, H2) ; 7,20-7,16 (m, 4H, H1) ; 3,74-3,71 (m, 4H, H4) et 3,10-3,05 (m, 4H, H3)
   RMN ¹⁹F: (CDCl₃): δ (ppm): -106,43
   RMN ³¹P: (CDCl₃): δ (ppm): 27,21

### A.2/ Synthèse des polymères

Le protocole expérimental appliqué pour la formation de polymères, à partir des monomères ci-dessus et, selon les polymères, du bisphénol A ou de l'isosorbide, est le suivant.

Dans un ballon tricol de 50 mL, équipé d'une agitation mécanique et balayé par un flux d'azote, 5,0 mmol de monomère phosphorylé difluoré (2a, 3a, 4a ou 5a), 5,0 mmol de diol (bisphénol A ou isosorbide) et 11 mmol de carbonate de potassium sont ajoutés dans le diméthylacétamide (DMAC). Le taux de solide dans le DMAC est de 25%. Le mélange réactionnel est placé sous agitation à 160 - 165°C pendant 24 h. Le milieu réactionnel est refroidi puis précipité dans l'eau. Après plusieurs rinçages à l'eau distillée, le polymère est séché sous vide à 100°C puis lavé plusieurs fois par le méthanol. Le polymère obtenu est séparé par filtration puis séché sous vide jusqu'à masse constante. Il se présente sous forme d'une poudre solide.

Ce procédé est appliqué pour la préparation du polymère P8 (conforme à l'invention) et des polymères P1 à P7 (non conformes à l'invention) suivants (pour chacun de ces polymères, la température de transition vitreuse Tg est mesurée par analyse thermogravimétrique ATG) : 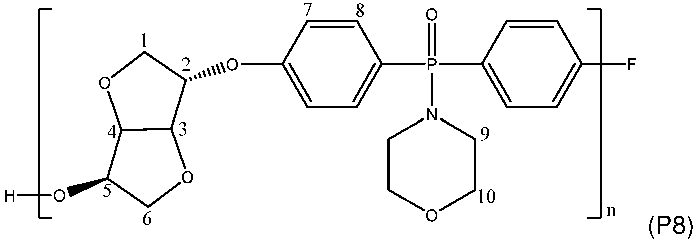
RMN ¹H : (CDCl₃) : δ (ppm) : 7.80-7.75 (m, 4H, H8), 7.03-6.98 (m, 4H, H7), 5.00-4.96 (m, 1H, H2), 4.86-4.80 (m, 2H, H5 et H3), 4.64-4.63 (m, 1H, H4), 4.19-4.03 (m, 4H, H1 et H6), 3.69 (s, 4H, H10), 3.05 (s, 4H, H9),
RMN ³¹P : (CDCl₃) : δ (ppm) : 29.5
Tg = 198°C ; 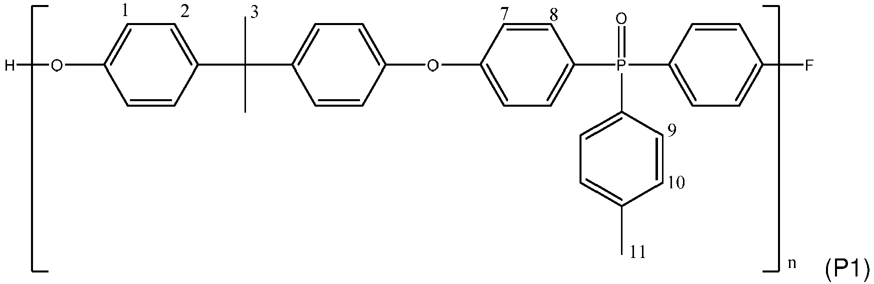
RMN ¹H : (CDCl3) : δ (ppm) : 7.63-7.53 (m, 6H, H8 et H9), 7.25-7.22 (m, 6H, H10 et H2), 7.04-6.95 (m, 8H, H7 et H1), 2.41 (s, 3H, H11), 1.69 (s, 6H, H3) RMN ³¹P : (CDCl3) : δ (ppm) : 28.65
Tg = 184°C ; 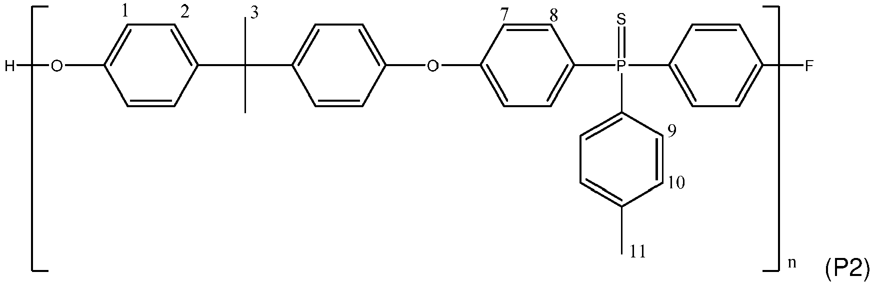
RMN ¹H : (CDCl3) : δ (ppm) : 7.69-7.58 (m, 6H, H8 et H9), 7.25-7.22 (m, 6H, H10 et H2), 7.02-6.95 (m, 8H, H7 etH1), 2.40 (s, 3H, H11), 1.70 (s, 6H, H3) RMN ³¹P : (CDCl3) : δ (ppm) : 41.46
Tg = 185°C ; 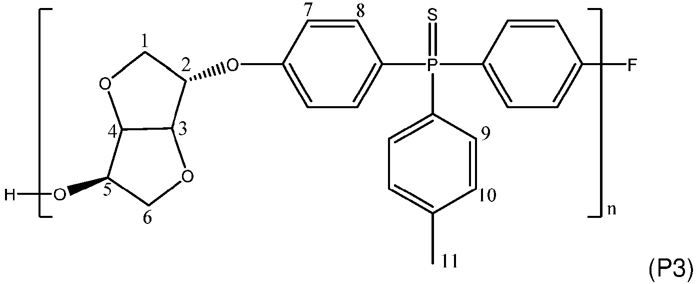
RMN ¹H : (CDCl3) : δ (ppm) : 7.68-7.56 (m, 6H, H8 et H9), 7.26-7.24 (m, 2H, H10), 7.02-6.97 (m, 4H, H7), 5.02-4.98 (m, 1H, H2), 4.88-4.81 (m, 2H, H5 et H3), 4.66-4.65 (m, 1H, H4), 4.05-4.03 (m, 4H, H1 et H6), 2.41 (s, 3H, H11) RMN ³¹P : (CDCl3) : δ (ppm) : 41.26
Tg = 196°C ; 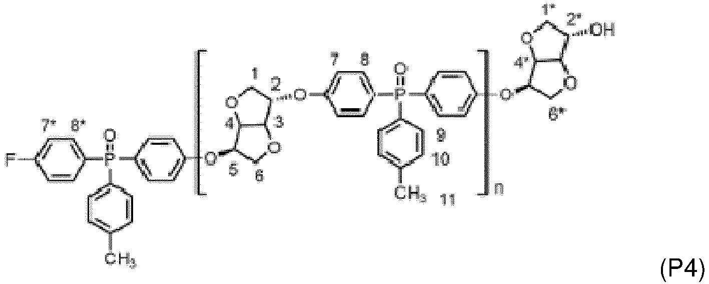
RMN ¹H : (CDCl3) : δ (ppm) : 7.62-7.51 (m, 6H, H8 et H9), 7.28-7.26 (m, 2H, H10), 7.04-6.98 (m, 4H, H7), 5.02-4.99 (m, 1H, H2), 4.89-4.82 (m, 2H, H5 et H3), 4.67-4.65 (m, 1H, H4) 4.05-4.04 (m, 4H, H1 et H6), 2.41 (s, 3H, H11) RMN ³¹P : (CDCl3) : δ (ppm) : 28.57
Tg = 202°C ; 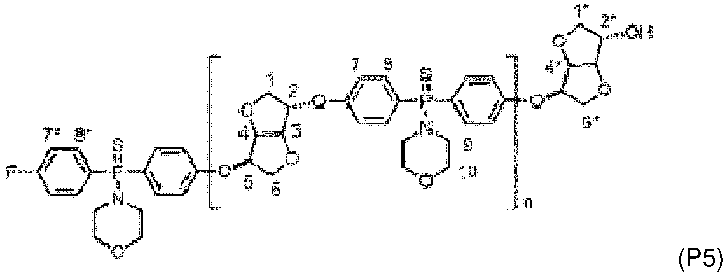
RMN ¹H : (CDCl₃) : δ (ppm) : 8.00-7.93 (m, 4H, H8), 7.03-6.96 (m, 4H, H7), 5.00-4.96 (m, 1H, H2), 4.86-4.80 (m, 2H, H5 et H3), 4.64-4.63 (m, 1H, H4), 4.19-4.03 (m, 4H, H1 et H6), 3,65 (s, 4H, H10), 2.75 (s, 4H, H9)
RMN ³¹P : (CDCl₃) : δ (ppm) : 66.05
Tg = 218°C ; 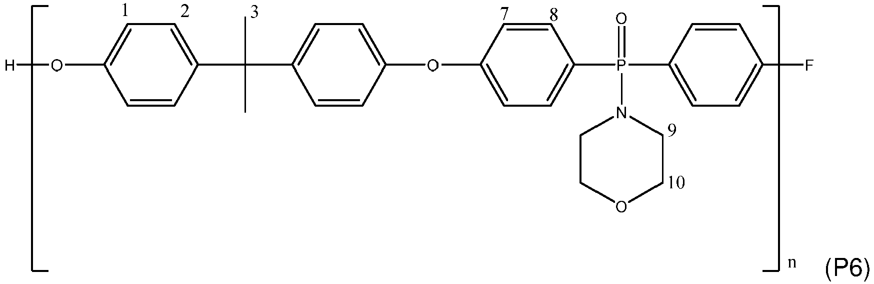
RMN ¹H : (CDCl₃) : δ (ppm) : 7.82-7.77 (m, 4H, H8), 7.28-7.24 (m, 4H, H2), 7.04-6.95 (m, 8H, H1 et H7), 3.70 (s, 4H, H10), 3.08 (s, 4H, H9), 1.71 (s, 6H, H3)
RMN ³¹P : (CDCl₃) : δ (ppm) : 29.08
Tg = 187°C ; 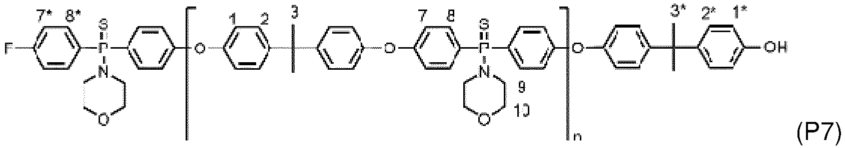
RMN ¹H : (CDCl₃) : δ (ppm) : 8.02-7.95 (m, 4H, H8), 7.26-7.23 (m, 4H, H2), 7.04-6.94 (m, 8H, H1 et H7), 3.75 (s, 4H, H10), 2.88 (s, 4H, H9), 1.71 (s, 6H, H3)
RMN ³¹P : (CDCl₃) : δ (ppm) : 66.09
Tg = 206°C.

### B/ Mesures d'affinité vis-à-vis de terres rares

Les mesures d'affinité sont réalisées par mesures par la technique de spectroscopie d'impédance électrochimique à l'interface polymère / solution de sel de terre rare. Des expériences sont réalisées pour les terres rares suivantes : lanthane, cérium.

A cet effet, chacun des polymères P1 à P8 ci-dessus est déposé sur une électrode plane en or ou platine de la façon suivante. L'électrode est rincée à l'acétone pendant 15 min, rincée à l'eau déminéralisée puis séchée sous flux d'azote. Ensuite, la surface de l'électrode est nettoyée pendant environ 5 min dans une solution de piranha (mélange 25% en volume de (H₂O₂ 35%) et 75% en volume de (H₂SO₄ 96%)) afin d'activer cette surface, puis rincée avec de l'eau ultrapure sous ultrasons pendant 10 min, et finalement séchée sous flux d'azote.

Une solution du polymère dans le chloroforme (5 µL, 1% m/m) est ensuite déposée, par dépôt à la goutte, sur la surface de l'électrode. Le solvant est évaporé sous flux d'azote à température ambiante.

Chaque électrode est immergée dans des solutions de la terre rare (lanthane ou cérium) à différentes concentrations (comprises entre 5.10⁻¹¹ M et 5.10⁻⁶ M pour le lanthane, et entre 10⁻⁸ M et 10⁻³ M pour le cérium) dans l'eau, à température ambiante. Il est procédé aux mesures après 20 min de temps d'immersion, pour s'assurer d'avoir atteint les conditions d'équilibre entre l'électrode enrobée de polymère et la solution.

Les mesures par spectroscopie d'impédance sont réalisées au moyen d'un potentiostat multivoie BioLogic EC-Lab^{®} VMP3 au potentiel de circuit ouvert, en appliquant une perturbation sinusoïdale de 10 mV, dans la gamme de fréquence de 100 mHz à 100 kHz. Les spectres d'impédance sont modélisés par un circuit équivalent de Randles, pour en extraire la valeur de la résistance de polarisation.

A titre d'exemple, sont montrés sur la figure 3 les spectres obtenus, en a/, pour le polymère P8 conforme à l'invention, et, en b/ pour la polymère P5, très proche en structure mais non conforme à l'invention, pour les solutions de lanthane.

On déduit de ces résultats l'affinité des différents polymères vis-à-vis du lanthane (en terme de sensibilité, définie comme le rapport de la variation relative de la résistance de polarisation sur le logarithme de la concentration en lanthane). Les résultats obtenus sont montrés sur la figure 4. On observe que le polymère P8 conforme à l'invention présente une affinité pour le lanthane bien plus importante que les polymères comparatifs testés, pourtant de structures très proches.

On déduit de cette expérience que le capteur impédimétrique obtenu à partir du polymère P8 conforme à l'invention permet une détection du lanthane dans une gamme de concentration de 7,2.10⁻¹¹ M à 7,2.10⁻⁶ M (gamme de concentration en lanthane pour laquelle la variation relative de la résistance est linéaire en fonction du logarithme de la concentration en lanthane), avec une limite de détection de 7,2.10⁻¹¹ M, et une sensibilité de 0,112.

Sont montrés à titre d'exemple sur la figure 5 les spectres obtenus, en a/, pour le polymère P8 conforme à l'invention, et, en b/ pour la polymère P5, très proche en structure mais non conforme à l'invention, pour les solutions de cérium.

On déduit de ces résultats l'affinité des différents polymères vis-à-vis du cérium (en terme de sensibilité, définie comme le rapport de la variation relative de la résistance de polarisation sur le logarithme de la concentration en cérium). Les résultats obtenus sont montrés sur la figure 6. Là encore, on observe que le polymère P8 conforme à l'invention présente une affinité pour le cérium bien plus importante que les polymères comparatifs testés, pourtant de structures très proches.

On déduit de cette expérience que le capteur impédimétrique obtenu à partir du polymère P8 conforme à l'invention permet une détection du cérium dans une gamme de concentration de 1,43.10⁻¹⁰ M à 1,43.10⁻⁵ M (gamme de concentration en cérium pour laquelle la variation relative de la résistance est linéaire en fonction du logarithme de la concentration en cérium), avec une limite de détection de 5,2.10⁻¹⁰ M, et une sensibilité de 0,15.

### C/ Etudes d'adsorption de terre rare sur le polymère en poudre

Les études d'adsorption sont menées par mélange de 100 mg de polymère P8 en poudre avec des solutions aqueuses contenant du lanthane ou du cérium (à une concentration de 10 µg/L - 10 ppb), et de l'acide phosphorique 0,42 % (10 mL) (4.10⁻² M, pH 1,4), puis agitation du mélange obtenu pendant 24 h. On prélève ensuite un échantillon du mélange, à l'aide d'une seringue, et on le filtre à travers un filtre en polytétrafluoroéthylène PTFE de 0,45 µm pour séparer le polymère du milieu liquide. On mesure la concentration de lanthane ou cérium dans le filtrat par la technique de spectrométrie de masse à plasma à couplage inductif (CP-MS) au moyen d'un appareil de mesure ICP MSMS 8800 Agilent.

On déduit de cette mesure la concentration de lanthane ou cérium qui a été adsorbée par le polymère. Cette concentration s'avère particulièrement élevée : 0,317 ppm pour le lanthane (0,317 µg/g de polymère) et 0,321 ppm (0,321 µg/g de polymère) pour le cérium.

La présence du lanthane sur la surface du polymère P8 conforme à l'invention est en outre mise en évidence grâce aux propriétés de luminescence du lanthane, comme illustré sur la figure 7. On observe une luminescence importante à l'issue de l'étape de mise en contact (en b/ sur la figure), alors qu'aucune luminescence n'était observée pour le polymère initial (en a/ sur la figure).

### D/ Désorption de la terre rare

Les poudres de polymère P8 obtenues à l'issue de l'expérience ci-avant d'adsorption de lanthane ou cérium sur le polymère en poudre, sont récupérées du milieu liquide par filtration.

Chacune des poudres obtenues est immergée dans une solution aqueuse comprenant un complexant des terres rares, phosphate de tributyle ou cis-1,3,5-triamino 2,4,6-trihydroxycyclohexane, à une concentration de 1 M. Après un temps d'incubation de 24 h, on récupère par filtration, d'une part, la poudre de polymère dépourvue de lanthane ou cérium, et, d'autre part, une solution aqueuse chargée en lanthane ou cérium.

## Revendications

1. Polymère comprenant un motif de répétition de formule générale (I) : 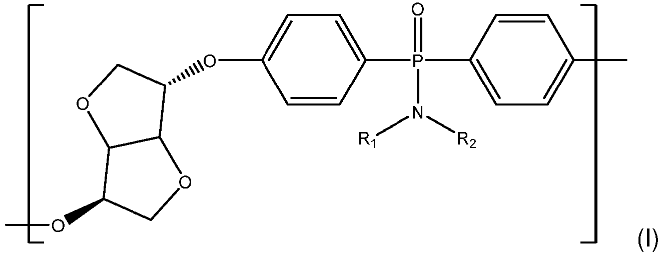 dans laquelle
R₁ et R₂, identiques ou différents, représentent chacun un atome d'hydrogène, ou un radical hydrocarboné linéaire, ramifié et/ou cyclique, saturé et/ou insaturé, aromatique ou non, pouvant comporter un seul cycle ou plusieurs cycles, éventuellement condensés, éventuellement interrompu par un ou plusieurs hétéroatomes,
ou R₁ et R₂ forment ensemble, avec l'atome d'azote auquel chacun est rattaché, un hétérocycle à 3 à 8 chainons, saturé ou insaturé, éventuellement aromatique, comprenant un ou plusieurs hétéroatomes dans le cycle, éventuellement substitué par un ou plusieurs radicaux alkyle linéaires, ramifiés et/ou cycliques, ledit hétérocycle étant éventuellement condensé à un ou plusieurs cycles ou hétérocycles à 3 à 8 chainons, saturés ou insaturés, éventuellement aromatiques, comprenant éventuellement un ou plusieurs hétéroatomes dans le cycle, et éventuellement substitués par un ou plusieurs radicaux alkyle linéaires, ramifiés et/ou cycliques.

2. Polymère selon la revendication 1, comprenant 10 à 50 répétitions du motif de répétition de formule générale (I).

3. Polymère selon la revendication 1 ou 2, qui est linéaire.

4. Polymère selon l'une quelconque des revendications 1 à 3, répondant à la formule générale (Ila) : 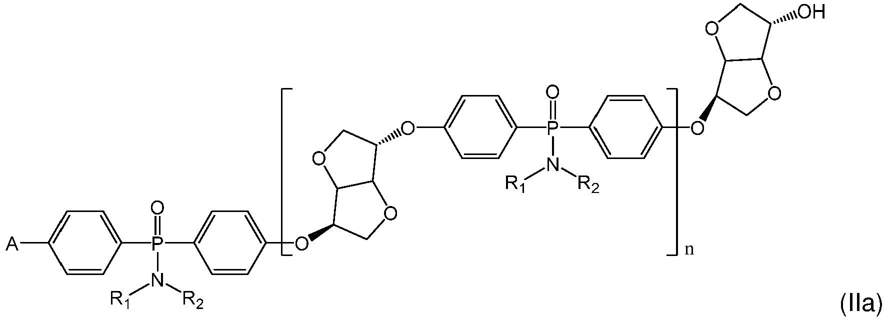 dans laquelle
n est un nombre entier compris entre 10 et 50,
et A représente un atome de fluor, un atome de chlore, un atome d'hydrogène ou un groupe hydroxyle.

5. Polymère selon l'une quelconque des revendications 1 à 4, dans lequel R₁ et R₂ forment ensemble, avec l'atome d'azote auquel chacun est rattaché, un noyau morpholine.

6. Polymère selon l'une quelconque des revendications 1 à 4, dans lequel R₁ et R₂, identiques ou différents, représentent chacun un atome d'hydrogène, un radical méthyle ou un radical éthyle.

7. Polymère selon l'une quelconque des revendications 1 à 4, dans lequel R₁ et R₂, identiques ou différents, représentent chacun un atome d'hydrogène, ou un noyau choisi parmi un noyau benzène et un noyau naphtalène, ledit noyau étant optionnellement substitué par un ou plusieurs radicaux alkyle linéaires, ramifiés et/ou cycliques.

8. Matériau composite, comprenant un polymère selon l'une quelconque des revendications 1 à 7 sur un support solide sous forme divisée.

9. Matériau composite selon la revendication 8, dans lequel ledit support solide est sous la forme de fibres, de billes ou de particules de forme irrégulière.

10. Matériau composite selon la revendication 8 ou 9, dans lequel ledit polymère est imprégné sur ou forme une couche d'enrobage sur ledit support solide.

11. Utilisation d'un polymère selon l'une quelconque des revendications 1 à 7 ou d'un matériau composite selon l'une quelconque des revendications 8 à 10, pour l'extraction d'une terre rare d'un milieu liquide aqueux la contenant.

12. Procédé d'extraction d'une terre rare d'un milieu liquide aqueux la contenant, **caractérisé en ce qu'**il comprend la mise en contact dudit milieu liquide avec un polymère selon l'une quelconque des revendications 1 à 7 ou un matériau composite selon l'une quelconque des revendications 8 à 10, puis la séparation dudit polymère ou dudit matériau composite, et dudit milieu.

13. Procédé d'extraction selon la revendication 12, selon lequel ladite mise en contact est réalisée à un pH inférieur ou égal à 3.

14. Procédé d'extraction selon la revendication 12 ou 13, comprenant une étape finale de séparation de ladite terre rare et dudit polymère ou dudit matériau composite.

15. Procédé d'extraction selon l'une quelconque des revendications 12 à 14, selon lequel ladite terre rare est un lanthanide, de préférence le lanthane ou le cérium.

16. Procédé d'extraction selon l'une quelconque des revendications 12 à 15, selon lequel ledit milieu liquide est un effluent minier.

## Patentansprüche

1. Polymer, das ein Wiederholungsmuster mit allgemeiner Formel (I) umfasst: 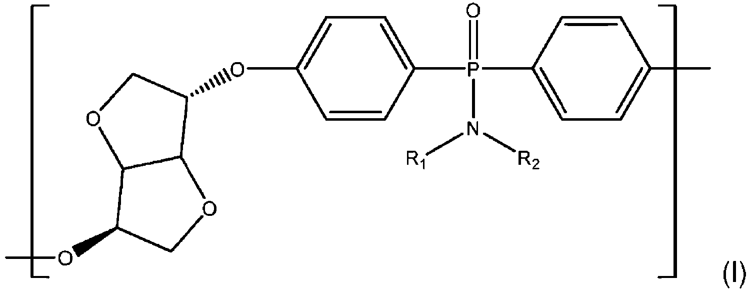 wobei:
R₁ und R₂, gleich oder unterschiedlich, jeweils ein Wasserstoffatom oder ein lineares Kohlenwasserstoffradikal, verzweigt und/oder zyklisch, gesättigt und/oder ungesättigt, aromatisch oder nicht, darstellen, das einen einzigen oder mehrere Zyklen, gegebenenfalls kondensiert, gegebenenfalls durch ein oder mehrere Heteroatome unterbrochen, aufweist,
oder R₁ und R₂ zusammen mit dem Stickstoffatom, dem sie jeweils zugeordnet sind, ein Heterozyklus mit 3 bis 8 Ketten, gesättigt oder ungesättigt, gegebenenfalls aromatisch, bilden, umfassend ein oder mehrere Heteroatome im Zyklus, gegebenenfalls substituiert durch einen oder mehrere lineare, verzweigte und/oder zyklische Alkylradikale, wobei der Heterozyklus gegebenenfalls zu einem oder mehreren Zyklen oder Heterozyklen mit 3 bis 8 Ketten, gesättigt oder ungesättigt, gegebenenfalls aromatisch, kondensiert ist, gegebenenfalls umfassend ein oder mehrere Heteroatome im Zyklus und gegebenenfalls substituiert durch einen oder mehrere lineare, verzweigte und/oder zyklische Alkylradikale.

2. Polymer nach Anspruch 1, umfassend 10 bis 50 Wiederholungen des Wiederholungsmusters der allgemeinen Formel (I).

3. Polymer nach Anspruch 1 oder 2, das linear ist.

4. Polymer nach einem der Ansprüche 1 bis 3, entsprechend der allgemeinen Formel (IIa): 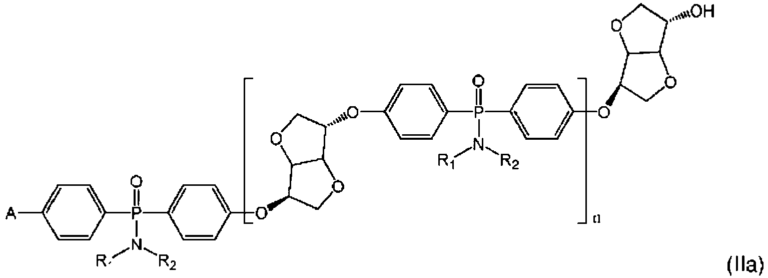 wobei:
n eine ganze Zahl zwischen 10 und 50 ist,
und A ein Fluoratom, ein Chloratom, ein Wasserstoffatom oder eine Hydroxylgruppe darstellt.

5. Polymer nach einem der Ansprüche 1 bis 4, wobei R₁ und R₂ zusammen mit dem Stickstoffatom, dem sie jeweils zugeordnet sind, einen Morpholinkern bilden.

6. Polymer nach einem der Ansprüche 1 bis 4, wobei R₁ und R₂, gleich oder unterschiedlich, jeweils ein Wasserstoffatom, ein Methylradikal oder ein Ethylradikal darstellen.

7. Polymer nach einem der Ansprüche 1 bis 4, wobei R₁ und R₂, gleich oder unterschiedlich, jeweils ein Wasserstoffatom oder einen Kern darstellen, der aus einem Benzolkern und einem Naphthalenkern ausgewählt ist, wobei der Kern optional durch einen oder mehrere lineare, verzweigte und/oder zyklische Alkylradikale substituiert ist.

8. Verbundmaterial, umfassend ein Polymer nach einem der Ansprüche 1 bis 7 auf einem festen Träger in geteilter Form.

9. Verbundmaterial nach Anspruch 8, wobei der feste Träger in Form von Fasern, Kugeln oder unregelmäßig geformten Partikeln vorliegt.

10. Verbundmaterial nach Anspruch 8 oder 9, wobei das Polymer auf dem festen Träger imprägniert ist oder eine Einbettschicht auf dem festen Träger bildet.

11. Verwendung eines Polymers nach einem der Ansprüche 1 bis 7 oder eines Verbundmaterials nach einem der Ansprüche 8 bis 10 zur Extraktion einer Seltenen Erde aus einem sie enthaltenden flüssigen wässrigen Medium.

12. Verfahren zur Extraktion einer Seltenen Erde aus einem sie enthaltenden flüssigen wässrigen Medium, **dadurch gekennzeichnet, dass** es das Berühren des flüssigen Mediums mit einem Polymer nach einem der Ansprüche 1 bis 7 oder einem Verbundmaterial nach einem der Ansprüche 8 bis 10 und anschließendes Trennen des Polymers oder des Verbundmaterials und des Mediums umfasst.

13. Extraktionsverfahren nach Anspruch 12, wobei die Kontaktierung bei einem pH-Wert kleiner oder gleich 3 durchgeführt wird.

14. Extraktionsverfahren nach Anspruch 12 oder 13, umfassend einen letzten Schritt der Trennung der Seltenen Erde und des Polymers oder des Verbundmaterials.

15. Extraktionsverfahren nach einem der Ansprüche 12 bis 14, wobei die Seltene Erde ein Lanthanid, vorzugsweise Lanthan oder Cerium ist.

16. Extraktionsverfahren nach einem der Ansprüche 12 bis 15, wobei das flüssige Medium ein Bergbauabwasser ist.

## Claims

1. Polymer comprising a repeating unit of the general formula (I): 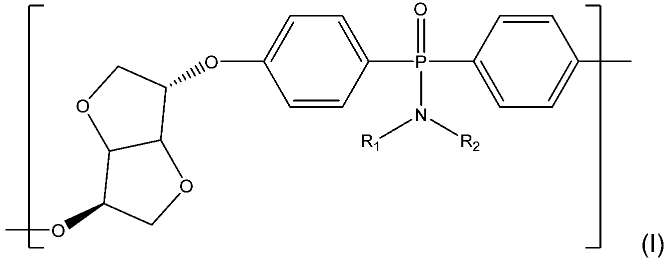 wherein
R₁ and R₂, identical or different, each represent a hydrogen atom, or a linear, branched and/or cyclic, saturated and/or unsaturated, aromatic or nonaromatic, hydrocarbon radical, optionally interrupted by one or more heteroatom(s), which can comprise a single ring or several rings, optionally condensed,
or R₁ and R₂ together, with the nitrogen atom to which each is attached, form a saturated or unsaturated, optionally aromatic, 3- to 8- membered heterocycle, comprising one or more heteroatom(s) in the cycle, optionally substituted with one or more linear, branched and/or cyclic alkyl radical(s), said heterocycle being optionally condensed to one or more saturated or unsaturated, optionally aromatic, 3- to 8- membered cycle(s) or heterocycle(s), optionally comprising one or more heteroatom(s) in the cycle, and optionally substituted with one or more linear, branched and/or cyclic alkyl radical(s).

2. Polymer according to claim 1, comprising 10 to 50 repeats of the repeating unit of the general formula (I).

3. Polymer according to claim 1 or 2, which is linear.

4. Polymer according to any one of claims 1 to 3, having the general formula (IIa): 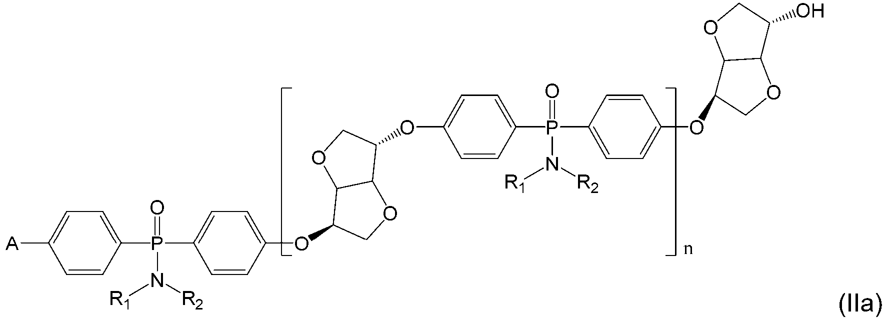 wherein
n is an integer between 10 and 50,
and A represents a fluorine atom, a chlorine atom, a hydrogen atom or a hydroxyl group.

5. Polymer according to any one of claims 1 to 4, wherein R₁ and R₂ together form, with the nitrogen atom to which each is attached, a morpholine nucleus.

6. Polymer according to any one of claims 1 to 4, wherein R₁ and R₂, identical or different, each represent a hydrogen atom, a methyl radical or an ethyl radical.

7. Polymer according to any one of claims 1 to 4, wherein R₁ and R₂, identical or different, each represent a hydrogen atom, or a nucleus chosen from a benzene nucleus and a naphthalene nucleus, said nucleus being optionally substituted with one or more linear, branched and/or cyclic alkyl radical(s).

8. Composite material, comprising a polymer according to any one of claims 1 to 7 on a solid support in divided form.

9. Composite material according to claim 8, wherein said solid support is in the form of fibers, beads or irregularly shaped particles.

10. Composite material according to claim 8 or 9, wherein said polymer is impregnated on or forms a coating layer on said solid support.

11. Use of a polymer according to any one of claims 1 to 7 or a composite material according to any one of claims 8 to 10, for the extraction of a rare earth from an aqueous liquid medium containing it.

12. Extraction method for extracting a rare earth from an aqueous liquid medium containing it, **characterized in that** it comprises contacting said liquid medium with a polymer according to any one of claims 1 to 7 or a composite material according to any one of claims 8 to 10, and then separating said polymer or composite material from said medium.

13. Extraction method according to claim 12, wherein said contacting is carried out at a pH less than or equal to 3.

14. Extraction method according to claim 12 or 13, comprising a final step of separating said rare earth from said polymer or said composite material.

15. Extraction method according to any one of claims 12 to 14, wherein said rare earth is a lanthanide, preferably lanthanum or cerium.

16. Extraction method according to any one of claims 12 to 15, wherein said liquid medium is a mining effluent.
